# EUROPEAN PATENT APPLICATION

(11) **EP 2 799 888 A1**
(43) Date of publication of application: **05.11.2014**
(21) Application number: 12862065.5
(22) Date of filing: 27.11.2012
(51) Int. Cl.: G01N 35/10

(54) **AUTOMATIC ANALYSIS DEVICE**

(30) Priority: 26.12.2011 JP 2011284487
(71) Applicant: Hitachi High-Technologies Corporation, Tokyo 105-8717 (JP)
(72) Inventor: SHIMASE Akihiro, Hitachinaka-shi Ibaraki 312-8504 (JP); SUZUKI Yoshihiro, Hitachinaka-shi Ibaraki 312-8504 (JP); ASADA Koichi, Hitachinaka-shi Ibaraki 312-8504 (JP); NAKAMURA Kazuhiro, Tokyo 105-8717 (JP)
(74) Representative: Calderbank, Thomas Roger
(86) International application number: PCT/JP2012/080647
(87) International publication number: WO 2013/099498

(57) **Abstract**

An automatic analyzer includes a sample dispensing unit 102 that dispenses a sample into a reaction vessel, a reagent dispensing unit 106 that dispenses a reagent, a sample nozzle cleaning tank 110 that cleans a nozzle of the sample dispensing unit 102, a reagent nozzle cleaning tank 111 that cleans a nozzle of the reagent dispensing unit 106, a compressor 8 that supplies compressed air, and cleaning water supply means 7 that supplies cleaning water. The tanks 110, 111 each have an upper vent 3 that allows a nozzle 2 to have access for cleaning, a lower vent 4 that drains the cleaning water, a cleaning water jet port 5 that sprays the cleaning water to the nozzle 2, and a compressed air jet port 6 that removes residual cleaning water left on the nozzle 2. The lower vent 4 has an opening area wider than that of the upper vent 3. This provides an automatic analyzer capable of drying the nozzle within a short period of time without allowing the cleaning water to splash outside and making an evaluation with high throughput and high accuracy.

## Description

### Technical Field

The present invention relates generally to automatic analyzers that perform qualitative and quantitative analyses of samples such as blood and urine and, more particularly, to an automatic analyzer having a device for cleaning and drying a nozzle used for dispensing a reagent and the sample.

### Background Art

In an automatic analyzer, serum that assumes a sample separated from blood by centrifugation is first dispensed in a reaction vessel by a sampling mechanism. Next, a pipetting mechanism such as a nozzle dispenses a reagent corresponding to a test item in the reaction vessel and the sample and the reagent are mixed with each other in the reaction vessel to thereby promote reaction. Thereafter, absorbance of a reaction solution in the reaction vessel is measured with a photometer to thereby analyze the test item of the sample.

During these steps, an inner wall and an outer wall of the nozzle that dispenses the sample or the reagent are cleaned with flowing water after the dispensing of the sample or the reagent, so that the nozzle is subjected to repeated use.

Cleaning water is left on the nozzle outer wall surface after the cleaning and can thin concentration of the sample or reagent in subsequent dispensing to thereby degrade analytical accuracy. In reality, however, the amount of cleaning water left on the outer wall surface has been too small to produce a large effect. Hitherto, the nozzle has been used as is without removing or drying the residual cleaning water on the nozzle.

Because of a general trend toward micro-dispensing, however, there is a stronger likelihood that the cleaning water will be brought to the sample or reagent when the sample or reagent is drawn in, changing concentration of the sample or reagent and thus affecting measurements. Thus, in a future attempt to make the amounts of sample and reagent smaller, the amount of residual cleaning water is not negligible and does affect the analysis, so that an accurate evaluation of the sample may be difficult.

Known automatic analyzers have devices for removing and drying the residual cleaning water, as disclosed, for example, in Patent Documents 1 and 2.

Patent Document 1 discloses an automatic analyzer that includes, in order to clean a reaction vessel, a vacuum system for discarding reaction solution and cleaning water for the reaction vessel through vacuum suction.

Patent Document 2 discloses a cleaning device for an automatic analyzer, the cleaning device allowing a probe to be inserted in, and retracted from, a cleaning chamber and including a water jet nozzle that jets pure water to the probe inserted in the cleaning chamber, an immersion cleaning tank disposed below the water jet nozzle, the immersion cleaning tank cleaning the probe dipped in water with pure water, and an air jet nozzle that blows compressed air against the probe being pulled up from the immersion cleaning tank to thereby dry the probe.

### Prior Art Documents

### Patent Documents

Patent Document 1: JP-2002-340913-A
Patent Document 2: JP-S62-242858-A

### Summary of the Invention

### Problem to be Solved by the Invention

To achieve improved throughput of the analyzer without impairing evaluation accuracy, shortening time required for cleaning and drying the nozzle poses a major challenge.

Vacuum drying, however, has its limit to ultimate pressure and it is generally difficult for vacuum drying to produce high air velocity and flow. Thus, the automatic analyzer disclosed in Patent Document 1 finds difficulty in drying the nozzle within a short period of time and has its limit in improving throughput.

In the cleaning device disclosed in Patent Document 2, the air jet nozzle is disposed closest to an upper vent. As a result, when compressed air is blown against the nozzle, the cleaning water left on the nozzle may splash to reduce cleanness of the device and, in the worst case, adversely affect accuracy in the sample evaluation.

The present invention has been made to solve the foregoing problems and it is an object of the present invention to provide an automatic analyzer capable of drying a nozzle within a short period of time without allowing cleaning water to splash outside and making an evaluation with high throughput and high accuracy.

### Means for Solving the Problem

To achieve the foregoing object, the present invention provides an automatic analyzer that performs a component analysis by measuring absorbance of a reaction solution chemically reacted in a reaction vessel, the automatic analyzer including: a dispensing nozzle that dispenses a reagent or a sample to be analyzed into a reaction vessel; a cleaning tank that cleans the nozzle; a cleaning water supply means that supplies the cleaning tank with cleaning water; and a compressed air supply means that supplies the cleaning tank with compressed air, wherein the cleaning tank includes a cleaning water jet port that supplies the cleaning tank with the cleaning water supplied from the cleaning water supply means, a compressed air jet port that jets the compressed air supplied from the compressed air supply means toward the nozzle inserted in the cleaning tank, an upper vent that allows the nozzle to have access thereto for cleaning, and a lower vent having an opening diameter wider than that of the upper vent, the lower vent allowing the cleaning water after cleaning to be discharged out of the cleaning tank.

### Effects of the Invention

According to the present invention described above, drying can be performed within a short period of time, so that the dispensing process can be performed within a short period of time. The amount of cleaning water left on the nozzle can also be reduced and this provides highly reliable data even in micro-dispensing, enabling the automatic analyzer to achieve higher throughput. The present invention provides an automatic analyzer capable of performing sample evaluations with high accuracy in a safe and clean environment, yielding very little harmful effect such as splashed cleaning water.

### Brief Description of the Drawings

Fig. 1 is a schematic view showing an automatic analyzer according to a first embodiment of the present invention.
Fig. 2 is a schematic view showing a cleaning tank of the automatic analyzer according to the first embodiment.
Fig. 3 is a schematic view showing the cleaning tank of the automatic analyzer according to the first embodiment.
Fig. 4A is a schematic view showing a cleaning tank of an automatic analyzer according to a second embodiment of the present invention.
Fig. 4B is a schematic view showing the cleaning tank of the automatic analyzer according to the second embodiment in its normal state.
Fig. 4C is a schematic view showing the cleaning tank of the automatic analyzer according to the second embodiment during access by a nozzle.
Fig. 5 is a schematic view showing a cleaning tank of an automatic analyzer according to a third embodiment of the present invention.
Fig. 6 is a schematic view showing a cleaning tank of an automatic analyzer according to a fourth embodiment of the present invention.
Fig. 7 is a schematic view showing a cleaning tank of an automatic analyzer according to a fifth embodiment of the present invention.
Fig. 8 is a schematic view showing a cleaning tank of an automatic analyzer according to a sixth embodiment of the present invention.
Fig. 9 is a schematic view showing a cleaning tank of an automatic analyzer according to a seventh embodiment of the present invention.
Fig. 10 is a schematic view showing a cleaning tank of an automatic analyzer according to an eighth embodiment of the present invention.
Fig. 11 is a schematic view showing a cleaning tank of an automatic analyzer according to a ninth embodiment of the present invention.
Fig. 12A is a schematic view showing a cleaning tank of an automatic analyzer according to a tenth embodiment of the present invention.
Fig. 12B is a cross-sectional view taken along line A-A in Fig. 12A.

### Modes for Carrying Out the Invention

Embodiments of the present invention will be described below with reference to the accompanying drawings.

### <First Embodiment>

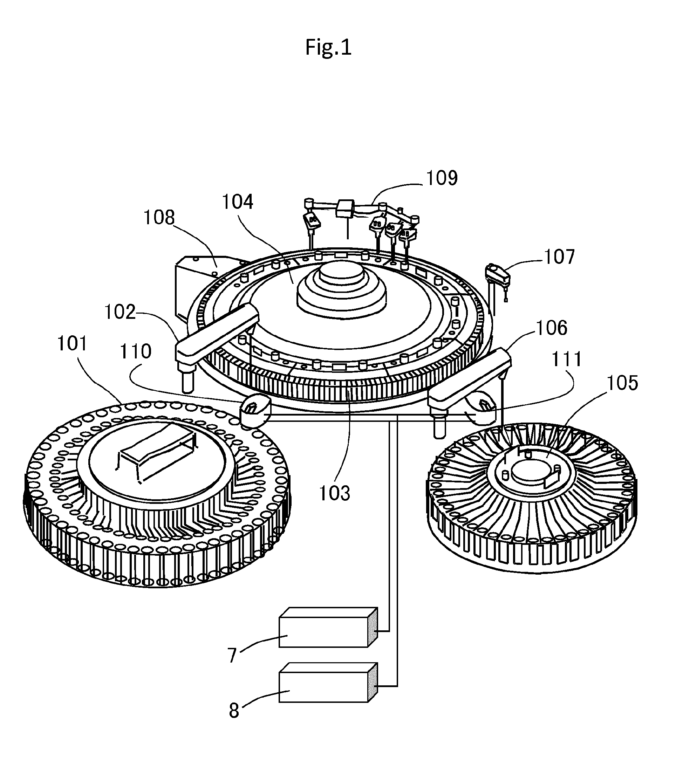

A first embodiment of the present invention will be described below with reference to Figs. 1 to 3.

Fig. 1 is a schematic view showing an exemplary configuration of an automatic analyzer according to the first embodiment of the present invention.

As shown in Fig. 1, the automatic analyzer includes a sample disk 101, a sample dispensing unit 102, a reaction cell 103, a reaction disk 104, a reagent disk 105, a reagent dispensing unit 106, a mixing mechanism 107, a photometer 108, and a reaction cell cleaning mechanism 109. Specifically, the sample disk 101 allows a sample to be loaded in the automatic analyzer. The sample dispensing unit 102 includes a pipetting nozzle for dispensing the sample into a reaction vessel. The reaction cell 103 assumes the reaction vessel. The reaction disk 104 assumes a holder for the reaction cell 103. The reagent disk 105 allows a reagent associated with a test item to be loaded therein. The reagent dispensing unit 106 includes a pipetting nozzle for dispensing the reagent. The mixing mechanism 107 mixes the sample and the reagent dispensed into the reaction cell. The photometer 108 subjects a reaction solution to colorimetric analysis. The reaction cell cleaning mechanism 109 suctions the reaction solution that has undergone the analysis and cleans the reaction cell after use.

The automatic analyzer further includes, as cleaning tanks, a sample nozzle cleaning tank 110 for cleaning the nozzle included in the sample dispensing unit 102 and a reagent nozzle cleaning tank 111 for cleaning the nozzle included in the reagent dispensing unit 106.

The automatic analyzer further includes cleaning water supply means 7 that supplies the sample nozzle cleaning tank 110 and the reagent nozzle cleaning tank 111 with cleaning water for cleaning a nozzle 2.

Additionally, the automatic analyzer includes a compressor 8 as compressed air supply means that supplies the sample nozzle cleaning tank 110 and the reagent nozzle cleaning tank 111 with compressed air. It is noted that, for the compressed air supply means, a device such as an air gun that contracts an elastic body within a short period of time may be used, in addition to the compressor.

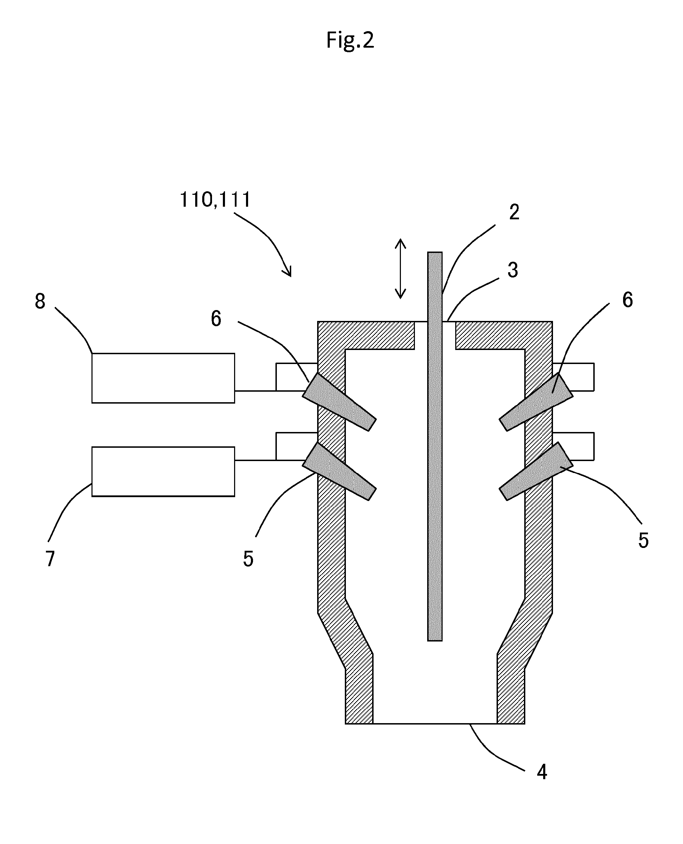

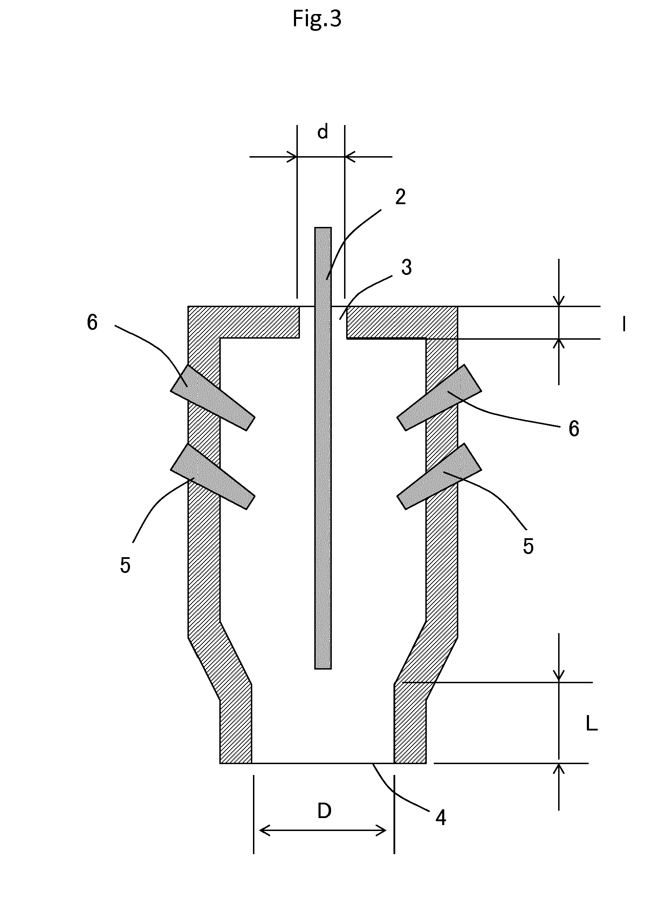

Figs. 2 and 3 are schematic views showing the cleaning tank of the automatic analyzer according to the first embodiment of the present invention.

The tanks 110, 111 each have an upper vent 3 and a lower vent 4. The upper vent 3 disposed at an upper portion of each of the tanks 110, 111 allows the nozzle 2 of the sample dispensing unit 102 or the reagent dispensing unit 106 to have access for cleaning. The lower vent 4 disposed at a lower portion of each of the tanks 110, 111 allows the cleaning water to be drained. Additionally, the tanks 110, 111 each have a cleaning water jet port 5 for spraying the cleaning water to the nozzle 2 and a compressed air jet port 6 for removing residual cleaning water left on the nozzle 2 and drying the nozzle 2. The cleaning water jet port 5 and the compressed air jet port 6 are connected to the cleaning water supply means 7 and the compressed air supply means 8, respectively. The cleaning water jet port 5 and the compressed air jet port 6 are each disposed so as to have a central axis extending obliquely downwardly such that the cleaning water and the compressed air, respectively, are jetted therefrom toward the lower vent 4 and smoothly discharged from the lower vent 4.

Reference is further made to Fig. 3. The tanks 110, 111 are each structured such that the lower vent 4 has an opening area D wider than an opening area d of the upper vent 3. Specifically, the upper vent 3 is constricted more than the lower vent 4.

Let d be the opening area of the upper vent 3, 1 be a length of the upper vent 3, D be the opening area of the lower vent 4, and L be a length of the lower vent 4. Then, preferably, the upper vent 3 and the lower vent 4 have a relation to satisfy d/l << D/L. The nozzle 2 normally has a diameter of about 1 to 3 mm. Considering an error in repeatability of the nozzle 2 in stopping, d should be made as small as possible and, preferably, within 5 mm. If making d small is not feasible, 1 may have a longer length.

It is noted that, preferably, the compressed air jet port 6 is disposed above the cleaning water jet port 5 in order that the compressed air jet port 6 may cover a range wider than a range wet by cleaning. This is, however, not intended to limit the present invention and the compressed air jet port 6 may be disposed below the cleaning water jet port 5.

The automatic analyzer having the arrangements as described above performs a sample analysis process in the following sequence.

The sample dispensing unit 102 uses the nozzle 2 (see Fig. 2) to dispense a sample to be analyzed from a vessel on the sample disk 101, the vessel storing therein the sample to be analyzed, into the reaction cell 103. Next, the reagent dispensing unit 106 uses the nozzle 2 (see Fig. 2) to dispense a reagent to be used for the analysis from a reagent vessel on the reagent disk 105 into the reaction cell 103. Then, the mixing mechanism 107 mixes a solution in the reaction cell 103.

Thereafter, light emitted from a light source is made to transmit through the reaction cell 103 containing the mixed solution to thereby allow the photometer 108 to measure the intensity of the light that has passed through the mixed solution. The intensity measured with the photometer 108 is transmitted to a computer via an A/D converter and an interface. A measurement obtained through calculations performed by the computer is then displayed on a display.

The sample nozzle cleaning tank 110 cleans a leading end of the nozzle 2 of the sample dispensing unit 102 each time the sample dispensing unit 102 dispenses a sample. Similarly, the reagent nozzle cleaning tank 111 cleans a leading end of the nozzle 2 of the reagent dispensing unit 106 each time the reagent dispensing unit 106 dispenses a reagent.

Similarly, the reaction cell 103 after a reaction is cleaned with the reaction vessel cleaning mechanism 109 for repeated use in subsequent reactions.

These operating mechanisms of the automatic analyzer are all controlled by a computer via a communication device and an interface.

Suction, cleaning, and discharge operations performed by the sample dispensing unit 102 and the reagent dispensing unit 106 will be described below. It is noted that the operations of suctioning, cleaning, and discharging the reagent by the reagent dispensing unit 106 are substantially the same as the operations of suctioning, cleaning, and discharging the sample by the sample dispensing unit 102 to be described below except that whereas the reagent dispensing unit 106 handles the reagent, the sample dispensing unit 102 handles the sample, and a description for the operations performed by the reagent dispensing unit 106 will be omitted.

First, the sample dispensing unit 102 is moved to the sample nozzle cleaning tank 110 and the nozzle 2 is then subjected to inner wall cleaning and outer wall cleaning.

The inner wall cleaning for the nozzle 2 is performed by passing water through the inside of the nozzle using a pump not shown and discharging the water from the inside of the nozzle 2. The outer wall cleaning for the nozzle 2 is performed by jetting cleaning water held in a water supply tank inside the cleaning water supply means 7 toward the outer wall of the nozzle 2 from the cleaning water jet port 5 in the sample nozzle cleaning tank 110. The cleaning water is thereafter stored in a waste solution tank not shown. Cleaning water left at this time on the nozzle outer wall, if not dried, is brought onto the sample to be next drawn in.

Thus, compressed air generated by the compressor 8 is jetted from the compressed air jet port 6 toward the outer wall of the nozzle 2 to thereby blow waterdrops (cleaning water) off the outer wall of the nozzle 2.

It is noted that the inside of the nozzle 2 filled with water is not dried.

Then, air is drawn into the inside of the nozzle 2 of the sample dispensing unit 102.

The sample dispensing unit 102 is then moved over a sample vessel on the sample disk 101 and lowered toward a liquid surface of a sample before the sample dispensing unit 102 suctions a predetermined amount of sample.

An excess amount of sample is at this time affixed to the outer wall of the nozzle 2 of the sample dispensing unit 102 holding the sample. To clean this, the sample dispensing unit 102 is moved to the sample nozzle cleaning tank 110. Cleaning water left on the outer wall of the nozzle 2 after the cleaning at this time, if it is not dried, is brought into the reaction cell 103.

Thus, compressed air is jetted from the compressed air jet port 6 toward the outer wall of the nozzle 2 to thereby blow waterdrops of the cleaning water left on the outer wall of the nozzle 2.

The nozzle 2 of the sample dispensing unit 102 is moved into the reaction cell 103 and the suctioned sample is discharged.

If a sample of the same type is to be measured, a suction step for the sample is performed without the inner wall or the outer wall of the sample dispensing unit 102 being cleaned.

In contrast, if a sample of a different type is to be measured, the nozzle 2 of the sample dispensing unit 102 needs to be subjected to inner wall cleaning and outer wall cleaning before the suction step for the next sample is started. The cleaning water left on the nozzle outer wall during this cleaning step is, however, brought to the next sample. The nozzle 2 is therefore dried. The inner wall cleaning and the outer wall cleaning performed at this time follow the same steps as described above: specifically, the inner wall of the nozzle is cleaned by passing water through the inside of the nozzle. The outer wall of the nozzle is cleaned by jetting cleaning water toward the outer wall of the nozzle and then blowing compressed air against the outer wall of the nozzle.

In an open cleaning tank having vents at upper and lower portions thereof as in the known arrangement, pressure inside the cleaning tank builds up instantaneously at the jetting of compressed air. No problem occurs as long as an air stream flows smoothly toward the lower vent on the drain side at this time. If the pressure is released only insufficiently to the lower portion, however, gas spurts out also from the upper vent. At the same time that the gas spurts out, residual cleaning water is also splashed. This reduces cleanness of the automatic analyzer and, in the worst case, may adversely affect accuracy in the sample evaluation.

In the cleaning tanks of the automatic analyzer according to the embodiment, as shown in Figs. 2 and 3, the cleaning water affixed to the nozzle outer wall as a result of the cleaning of the dispensing nozzle is blown off and dried by compressed air and the compressed air is guided toward the lower vent side by way of the draining lower vent having an opening diameter greater than an opening diameter of the upper vent for access by the nozzle.

This enables the nozzle outer wall to be dried within an extremely short period of time. While promoting shortening of time required for dispensing, the automatic analyzer minimizes likelihood that measurements will be affected by the cleaning water brought to the sample or reagent when the sample or reagent is suctioned and causing a change in concentration of the sample or reagent. Moreover, the automatic analyzer prevents the cleaning water left on the nozzle from splashing outside the cleaning tank via the upper vent when the compressed air is blown. Thus, the automatic analyzer maintains its cleanness and reduces likelihood that the accuracy in sample evaluation will be adversely affected.

This achieves an automatic analyzer capable of making an evaluation with high throughput and high accuracy.

### <Second Embodiment>

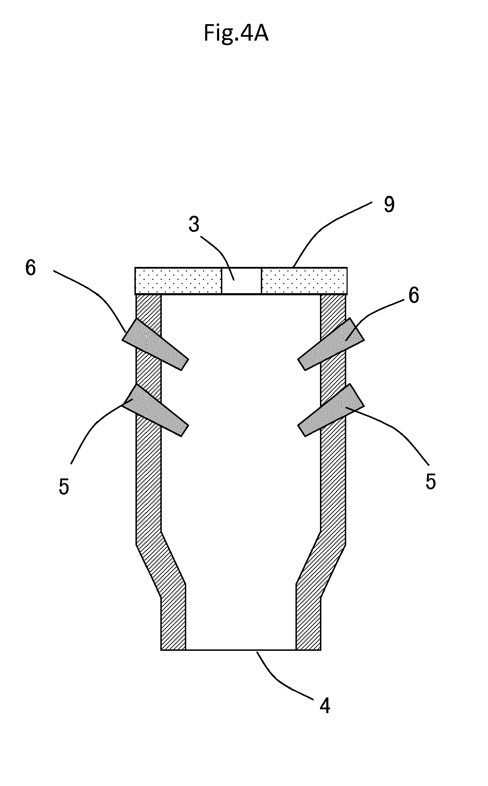

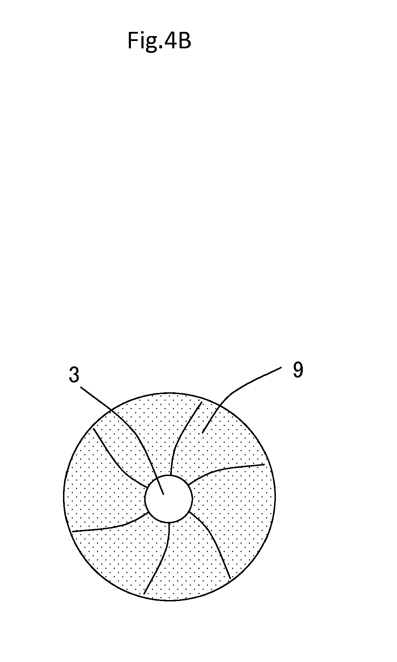

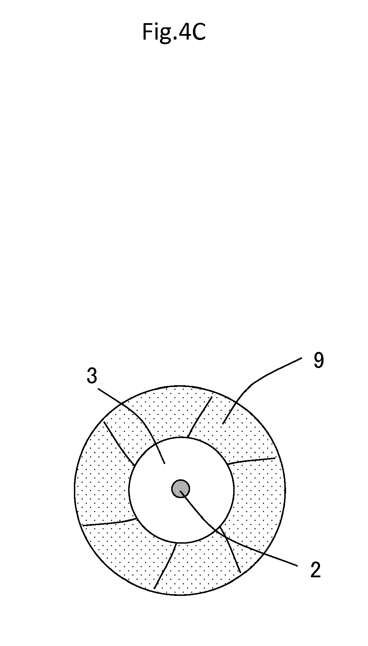

An automatic analyzer according to a second embodiment of the present invention will be described with reference to Figs. 4A to 4C. The automatic analyzer according to the embodiment includes a cleaning tank having a different construction. Except for the cleaning tank, arrangements of the automatic analyzer according to the second embodiment are substantially the same as those of the automatic analyzer according to the first embodiment and detailed descriptions therefor will be omitted. Fig. 4A is a schematic view showing the cleaning tank of the automatic analyzer according to the second embodiment. Fig. 4B is a schematic view showing the cleaning tank of the automatic analyzer according to the second embodiment in its normal state. Fig. 4C is a schematic view showing the cleaning tank of the automatic analyzer according to the second embodiment during access by the nozzle.

As shown in Fig. 4A, the cleaning tank of the embodiment has an upper vent 3 in which a variable aperture 9 as a movable mechanism is disposed. In such a cleaning tank, referring to Fig. 4B, at any normal time other than during accessing by a nozzle 2 (that may be time at which the nozzle 2 does not access during, for example, dispensing or at which the nozzle 2 is dried), the variable aperture 9 is constricted, so that a lower vent 4 has an opening area greater than that of the upper vent 3. In contrast, as shown in Fig. 4C, when the nozzle 2 accesses the cleaning tank by way of the upper vent 3, the variable aperture 9 is opened to expand the opening area of the upper vent 3, thereby allowing the nozzle 2 to have easy access. At this time, the opening area of the upper vent 3 may be greater or smaller than an opening area of the lower vent 4.

The opening area of the upper vent is thus wider during access by the nozzle. Even with a large error in repeatability of the nozzle in stopping, therefore, the nozzle can be prevented from interfering with the cleaning tank and avoided from colliding with the cleaning tank. This reduces likelihood, for example, that the nozzle will be deformed, prevents dispensing accuracy from being reduced, and reduces maintenance frequency.

Additionally, the variable aperture is opened wide only during access by the nozzle. When the compressed air is jetted, therefore, the variable aperture can be closed to make the opening area of the lower vent wider than the opening area of the upper vent, thereby preventing the cleaning water from splashing.

Thus, the automatic analyzer develops less trouble and can reduce maintenance frequency.

It is noted that timing at which the opening area of the upper vent 9 is widened by the variable aperture 9 is not limited to that of access by the nozzle 2. The opening area of the upper vent 3 may be widened during dispensing, but should not be widened at least during drying of the nozzle 2.

### <Third Embodiment>

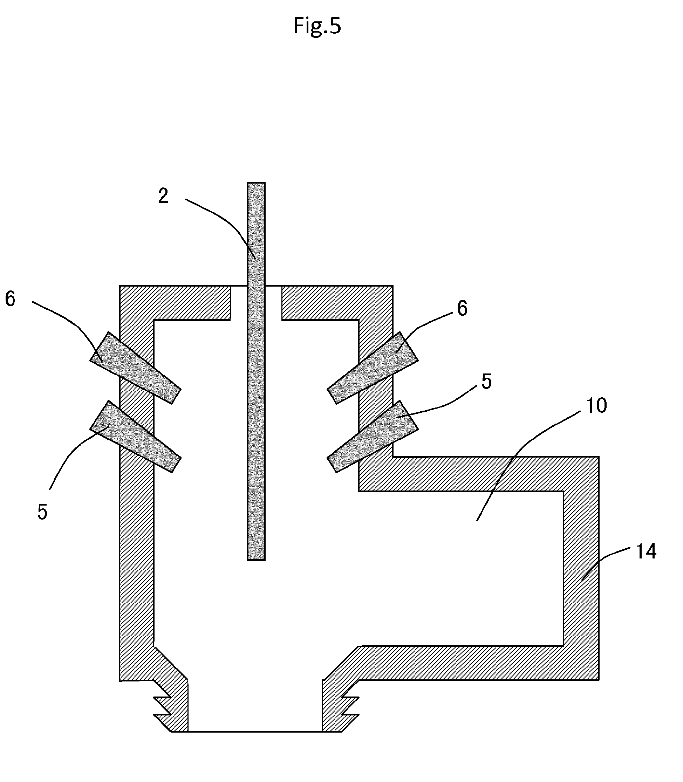

An automatic analyzer according to a third embodiment of the present invention will be described with reference to Fig. 5. Except for the cleaning tank, arrangements of the automatic analyzer according to the third embodiment are substantially the same as those of the automatic analyzer according to the first embodiment and detailed descriptions therefor will be omitted. Fig. 5 is a schematic view showing the cleaning tank of the automatic analyzer according to the third embodiment.

As shown in Fig. 5, the cleaning tank of the embodiment has a pressure buffer space 10 in addition to a space that constitutes the cleaning tank, to thereby expand a volume V of the cleaning tank. The pressure buffer space 10 communicates with the cleaning tank space and forms a protruding part 14 that protrudes from an outer peripheral surface of the cleaning tank.

Having the pressure buffer space inside the cleaning tank that satisfies v << V, where v denotes compressed air jet amount, as described above allows a sharp increase in pressure to be prevented. This results in a mild flow of gas that overflows from the upper vent, so that the cleaning water can be prevented from splashing even more reliably.

### <Fourth Embodiment>

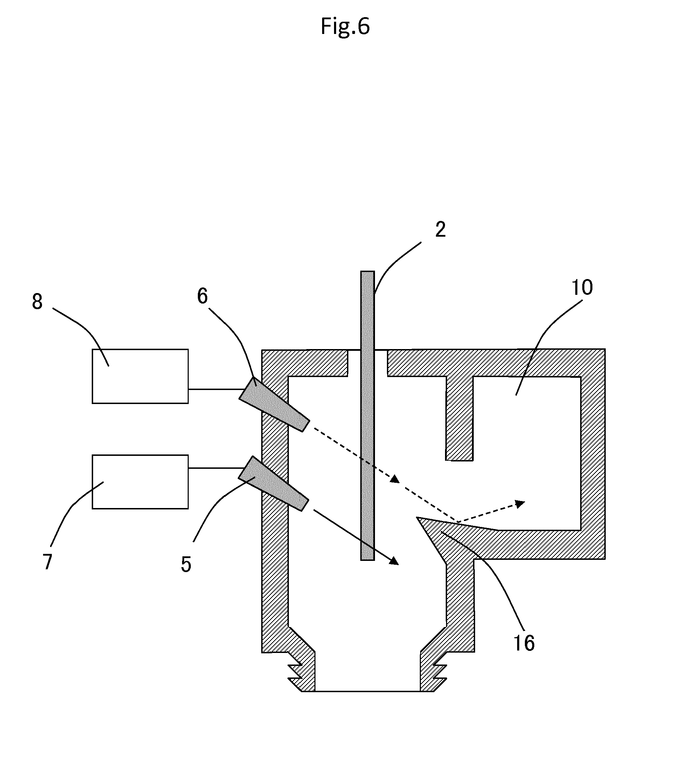

An automatic analyzer according to a fourth embodiment of the present invention will be described with reference to Fig. 6. Except for the cleaning tank, arrangements of the automatic analyzer according to the fourth embodiment are substantially the same as those of the automatic analyzer according to the first embodiment and detailed descriptions therefor will be omitted. Fig. 6 is a schematic view showing the cleaning tank of the automatic analyzer according to the fourth embodiment.

As shown in Fig. 6, the cleaning tank of this embodiment has a pressure buffer space 10 and further includes a structure (air flow guide) 16 that guides the flow of jetted compressed air.

The foregoing arrangement allows, as shown by the arrow (broken line) in Fig. 6, the jetted air to hit against the air flow guide 16 and to flow smoothly into the pressure buffer space 10. This even more prevents pressure in the cleaning tank from increasing and thus even more effectively prevents the cleaning water from splashing outside the cleaning tank. In addition, as shown by the arrow (solid line) in Fig. 6, the cleaning water flows from a lower portion of the air flow guide 16 toward a lower vent 4. This prevents the cleaning water from being left in the pressure buffer space 10.

### <Fifth Embodiment>

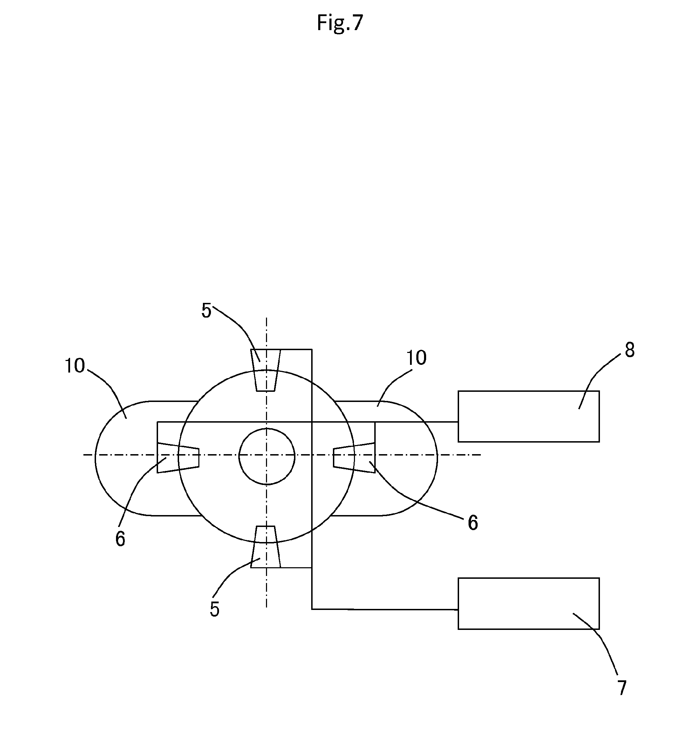

An automatic analyzer according to a fifth embodiment of the present invention will be described with reference to Fig. 7. Except for the cleaning tank, arrangements of the automatic analyzer according to the fifth embodiment are substantially the same as those of the automatic analyzer according to the first embodiment and detailed descriptions therefor will be omitted. Fig. 7 is a schematic view showing the cleaning tank of the automatic analyzer according to the fifth embodiment.

As shown in Fig. 7, the cleaning tank of this embodiment has cleaning water jet ports 5 and compressed air jet ports 6, each being oriented toward a direction 90° apart from each other, so that the cleaning water jet ports 5 have a central axis not extending in a direction of pressure buffer spaces 10.

The cleaning water is also jetted to the cleaning tank. The foregoing arrangement therefore allows the cleaning water to be prevented from staying in the pressure buffer space 10, so that cleanness of the automatic analyzer and, in particular, cleanness of the cleaning tank can be maintained at a higher level.

### <Sixth Embodiment>

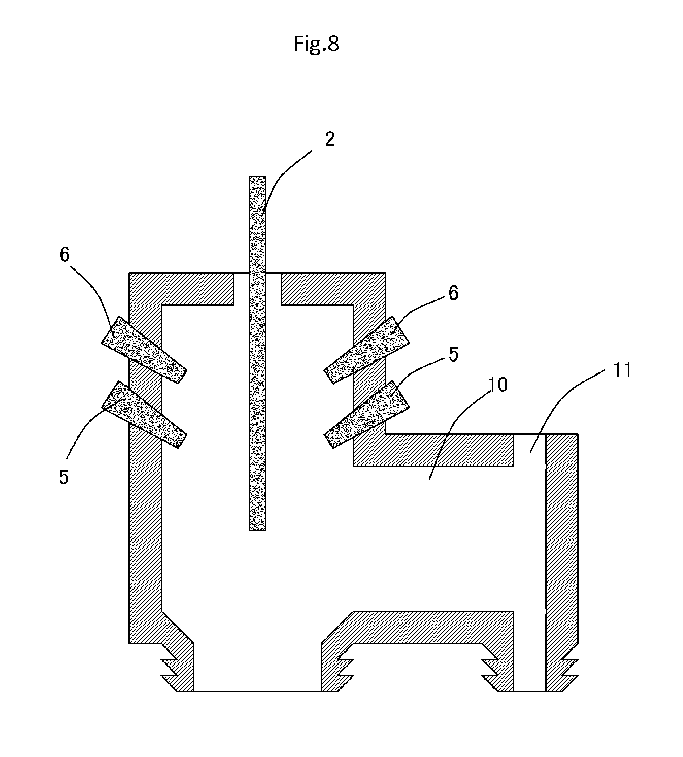

An automatic analyzer according to a sixth embodiment of the present invention will be described with reference to Fig. 8. Except for the cleaning tank, arrangements of the automatic analyzer according to the sixth embodiment are substantially the same as those of the automatic analyzer according to the first embodiment and detailed descriptions therefor will be omitted. Fig. 8 is a schematic view showing the cleaning tank of the automatic analyzer according to the sixth embodiment.

As shown in Fig. 8, the cleaning tank of this embodiment includes a pressure buffer space 10 that has a vent 11. In the cleaning tank having such a structure, jetted compressed air is mainly released from the vent 11 and the cleaning water after cleaning is mainly discharged from a lower vent 4.

The vent 11 may be composed of a plurality of vents and the vents may be open to the atmosphere, in addition to the drain side.

The foregoing arrangements allow the jetted compressed air to be efficiently discharged outside the cleaning tank, so that pressure inside the cleaning tank can be more effectively prevented from increasing and the cleaning water can be more effectively prevented from splashing by way of the upper vent.

### <Seventh Embodiment>

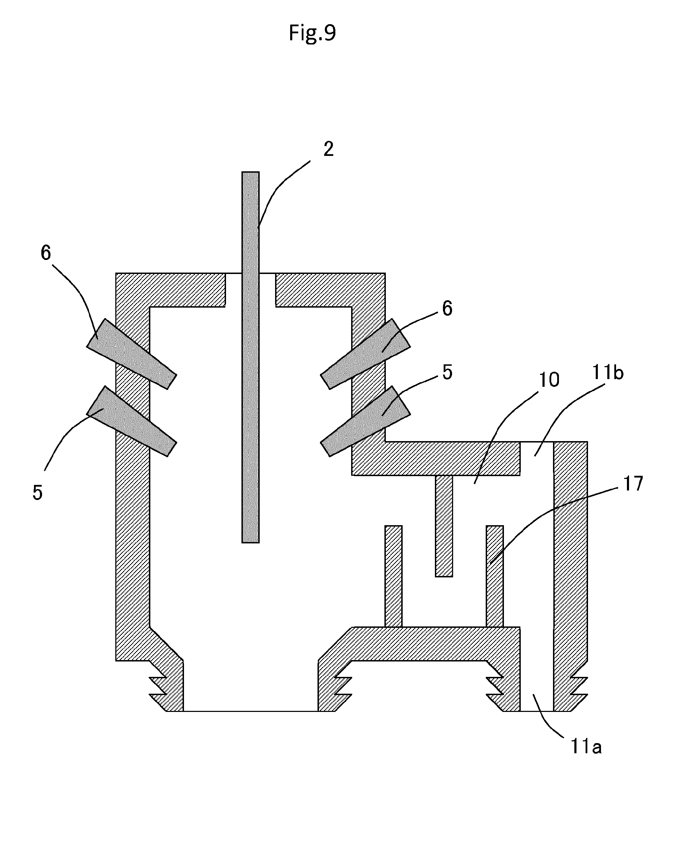

An automatic analyzer according to a seventh embodiment of the present invention will be described with reference to Fig. 9. Except for the cleaning tank, arrangements of the automatic analyzer according to the seventh embodiment are substantially the same as those of the automatic analyzer according to the first embodiment and detailed descriptions therefor will be omitted. Fig. 9 is a schematic view showing the cleaning tank of the automatic analyzer according to the seventh embodiment of the present invention.

As shown in Fig. 9, the cleaning tank of this embodiment includes a pressure buffer space 10 that has a vent 11. The pressure buffer space 10 further has a trap 17 so that the blown cleaning water is not discharged from the vent 11. In the cleaning tank, while the cleaning water that has flowed mainly the compressed air is trapped by the trap 17 and flows toward a drain-side vent 11a of the vent 11, the compressed air is discharged from an atmosphere-side vent 11b of the vent 11.

The trap 17 may have a cyclone structure.

The foregoing arrangements allow the air and the cleaning water to be easily separated from each other and to be discharged by way of respective vents 11. This even more prevents the cleaning water from splashing outside the cleaning tank.

### <Eighth Embodiment>

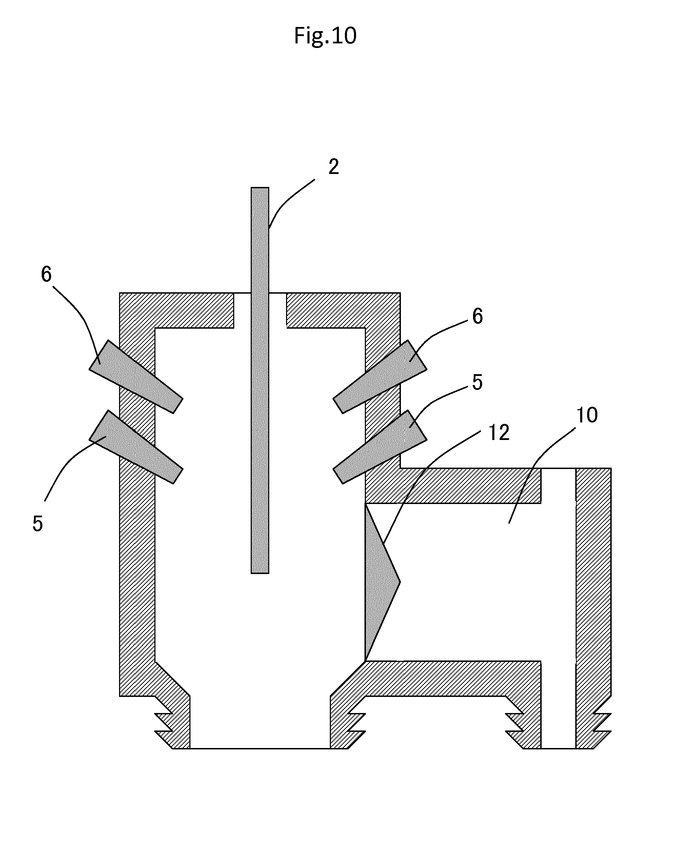

An automatic analyzer according to an eighth embodiment of the present invention will be described with reference to Fig. 10. Except for the cleaning tank, arrangements of the automatic analyzer according to the eighth embodiment are substantially the same as those of the automatic analyzer according to the first embodiment and detailed descriptions therefor will be omitted. Fig. 10 is a schematic view showing the cleaning tank of the automatic analyzer according to the eighth embodiment of the present invention.

As shown in Fig. 10, the cleaning tank of this embodiment includes a check valve 12 disposed at a connection between a space constituting the cleaning tank and a pressure buffer space 10. The check valve 12 allows passage of air in one direction only.

The foregoing arrangement prevents air that has flowed into the pressure drying space 10 from flowing in reverse to the side of the cleaning tank. This even more prevents pressure inside the cleaning tank from building up and thus even more prevents the cleaning water from splashing outside the cleaning tank by way of the upper vent.

### <Ninth Embodiment>

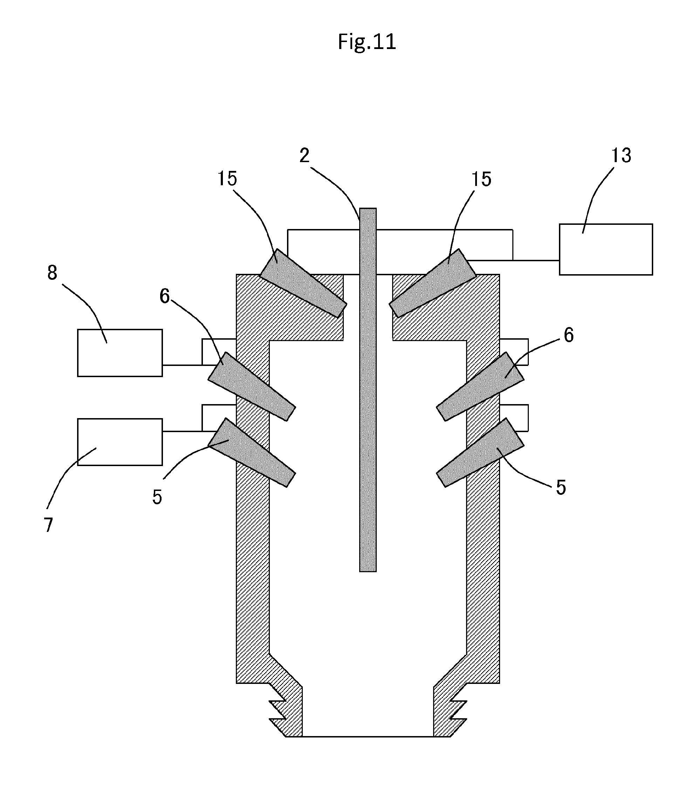

An automatic analyzer according to a ninth embodiment of the present invention will be described with reference to Fig. 11. Except for the cleaning tank, arrangements of the automatic analyzer according to the ninth embodiment are substantially the same as those of the automatic analyzer according to the first embodiment and detailed descriptions therefor will be omitted. Fig. 11 is a schematic view showing the cleaning tank of the automatic analyzer according to the ninth embodiment.

As shown in Fig. 11, the cleaning tank of this embodiment has, in addition to a compressed air jet port 6, a vacuum suction port 15 disposed at a position at which an upper vent 3 has a constricted diameter, the vacuum suction port 15 suctioning the cleaning water affixed to a nozzle 2. The vacuum suction port 15 is connected to vacuum means 13 and controlled so as to draw air from the inside of the cleaning tank when the compressed air is jetted or when the nozzle 2 leaves the cleaning tank.

The arrangements, having additionally the vacuum suction port 15 to thereby use both vacuum suction and compressed air blowing, achieve an advantage of enhanced drying capacity by causing the vacuum side to trap residual cleaning water that has not been removed by the compressed air blowing. Another effect that can be achieved is to attract cleaning water splashed when the compressed air is guided or jetted.

It is noted that the vacuum suction by the vacuum suction port 15 is more effective when performed in a narrow space than in a wide space and, preferably, the vacuum suction port 15 is disposed at the upper vent 3. This is, nonetheless, the only possible arrangement.

Alternatively, if the vacuum suction port 15 is disposed below the compressed air jet port 6 and if the amount of vacuum suctioned is equal to, or greater than, the amount of compressed air jetted, gas can be prevented from overflowing from the upper vent 3. Nonetheless, even with the amount of vacuum suctioned remaining small, the effect of guiding the flow of air inside the cleaning tank toward the lower portion can be obtained. Thus, the same effect can be achieved of minimizing overflow from the upper vent and splash of the cleaning water.

### <Tenth Embodiment>

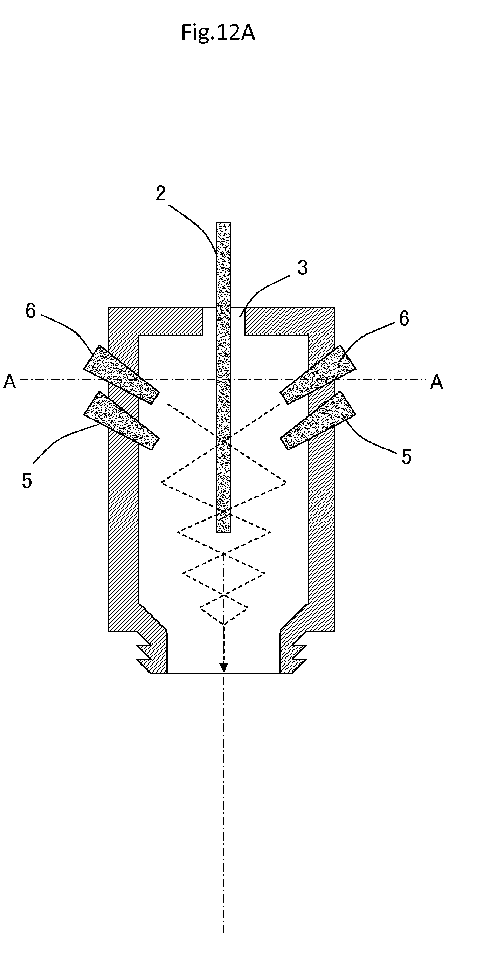

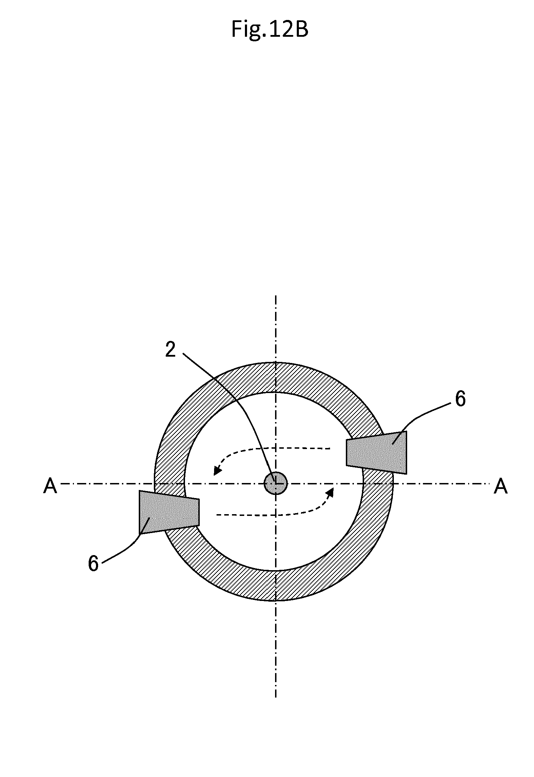

An automatic analyzer according to a tenth embodiment of the present invention will be described with reference to Figs. 12A and 12B. Except for the cleaning tank, arrangements of the automatic analyzer according to the tenth embodiment are substantially the same as those of the automatic analyzer according to the first embodiment and detailed descriptions therefor will be omitted. Fig. 12A is a schematic view showing the cleaning tank of the automatic analyzer according to the tenth embodiment. Fig. 12B is a cross-sectional view taken along line A-A in Fig. 12A.

As shown in Fig. 12A, the cleaning tank of this embodiment has a plurality of compressed air jet ports 6 disposed at diagonally opposite positions as shown in Fig. 12B so that compressed air jetted from the respective compressed air jet ports 6 does not collide with each other so overflow from an upper vent 3. Each of the compressed air jet ports 6 thus has a central axis extending to be deviated from a central axis of the cleaning tank, so that a swirl flow is generated. Preferably, however, the central axes should not to be deviated to such an extent as to cause the compressed air to collide with a nozzle 2.

In the cleaning tank having the foregoing arrangements, the compressed air guided by the swirl flow flows toward a lower vent 4 while swirling around the nozzle 2 and is thus smoothly discharged from the lower vent 4 as shown in Fig. 12A. This even more prevents the cleaning water from splashing from the upper vent 3.

Even if the cleaning tank has one compressed air jet port 6, disposing an extension of the central axis of the compressed air jet port 6 so as to be deviated from the central axis of the cleaning tank produces a swirl flow. Likewise, the cleaning water can be prevented from splashing.

### <Miscellaneous>

The above embodiments have been described for the automatic analyzer for clinical testing, performing an analysis of biological samples such as blood and urine. The present invention is nonetheless applicable to an automatic analyzer having another function, as long as the automatic analyzer includes a dispensing nozzle and a cleaning tank for cleaning the dispensing nozzle.

### Description of Reference Numerals

- 1:: Cleaning tank
- 2:: Nozzle
- 3:: Upper vent
- 4:: Lower vent
- 5:: Cleaning water jet port
- 6:: Compressed air jet port
- 7:: Cleaning water supply means
- 8:: Compressor (compressed air supply means)
- 9:: Variable aperture
- 10:: Pressure buffer space
- 11:: Vent
- 12:: Check valve
- 13:: Vacuum means
- 14:: Protruding part
- 15:: Vacuum suction port
- 16:: Air flow guide
- 17:: Trap
- 101:: Sample disk
- 102:: Sample dispensing unit
- 103:: Reaction cell
- 104:: Reaction disk
- 105:: Reagent disk
- 106:: Reagent dispensing unit
- 107:: Mixing mechanism
- 108:: Photometer
- 109:: Cleaning mechanism
- 110:: Cleaning tank (for sample nozzle)
- 111:: Cleaning tank (for reagent)

## Claims

1. An automatic analyzer that performs a component analysis by measuring absorbance of a reaction solution chemically reacted in a reaction vessel, the automatic analyzer comprising:
a dispensing nozzle that dispenses a reagent or a sample to be analyzed into a reaction vessel;
a cleaning tank that cleans the nozzle;
a cleaning water supply means that supplies the cleaning tank with cleaning water; and
a compressed air supply means that supplies the cleaning tank with compressed air, wherein
the cleaning tank includes a cleaning water jet port that supplies the cleaning tank with the cleaning water supplied from the cleaning water supply means, a compressed air jet port that jets the compressed air supplied from the compressed air supply means toward the nozzle inserted in the cleaning tank, an upper vent that allows the nozzle to have access thereto for cleaning, and a lower vent having an opening diameter wider than that of the upper vent, the lower vent allowing the cleaning water after cleaning to be discharged out of the cleaning tank.

2. The automatic analyzer according to claim 1,
wherein the cleaning tank further includes a movable mechanism that widens an opening area of the upper vent during access by the nozzle.

3. The automatic analyzer according to claim 1 or 2, wherein the cleaning tank further has a protruding part that protrudes from an outer peripheral surface thereof so as to form a space in the cleaning tank, the space having a volume greater than that of an amount of jetted compressed air.

4. The automatic analyzer according to claim 3,
wherein the cleaning tank further includes a structure that guides the jetted compressed air in the space.

5. The automatic analyzer according to claim 3,
wherein the cleaning tank further includes a check valve disposed in the space, the check valve allowing passage of air in one direction only.

6. The automatic analyzer according to any one of claims 1 to 5, wherein the cleaning tank further has a vacuum suction port connected to a vacuum means.

7. The automatic analyzer according to any one of claims 1 to 6, wherein the cleaning tank has a plurality of compressed air jet ports disposed at diagonally opposite positions.

## Amended claims

### Amended claims in accordance with Rule 137(2) EPC.

**1.** (After amendment) An automatic analyzer that performs a component analysis by measuring absorbance of a reaction solution chemically reacted in a reaction vessel, the automatic analyzer comprising:
a dispensing nozzle that dispenses a reagent or a sample to be analyzed into a reaction vessel;
a cleaning tank that cleans the nozzle;
a cleaning water supply means that supplies the cleaning tank with cleaning water; and
a compressed air supply means that supplies the cleaning tank with compressed air, wherein
the cleaning tank includes
a cleaning water jet port that supplies the cleaning tank with the cleaning water supplied from the cleaning water supply means,
a compressed air jet port that jets the compressed air supplied from the compressed air supply means toward the nozzle inserted in the cleaning tank,
an upper vent that allows the nozzle to have access thereto for cleaning,
a lower vent having an opening diameter wider than that of the upper vent, the lower vent allowing the cleaning water after cleaning to be discharged out of the cleaning tank, and
a protruding part that protrudes from an outer peripheral surface thereof so as to form a space in the cleaning tank, the space having a volume greater than that of an amount of jetted compressed air.

**2.**
The automatic analyzer according to claim 1, wherein the cleaning tank further includes a movable mechanism that widens an opening area of the upper vent during access by the nozzle.

**3.** (Deleted)

**4.** (After amendment)
The automatic analyzer according to claim 1, wherein the cleaning tank further includes a structure that guides the jetted compressed air in the space.

**5.** (After amendment)
The automatic analyzer according to claim 1, wherein the cleaning tank further includes a check valve disposed in the space, the check valve allowing passage of air in one direction only.

**6.** (After amendment)
The automatic analyzer according to any one of claims 1, 2, 4 and 5, wherein the cleaning tank further has a vacuum suction port connected to a vacuum means.

**7.** (After amendment)
The automatic analyzer according to any one of claims 1, 2, 4, 5 and 6, wherein the cleaning tank has a plurality of compressed air jet ports disposed at diagonally opposite positions.
Statement under Article 19(1) An amendment has been made to add claim 3 into claim 1 to thereby cancel claim 3. This amendment has resulted in another amendment of reorganizing dependency of claims 4 to 7.
Support for these amendments can be found in paragraphs (0040) to (0058) and Figs. 5 to 10 in the specification.
No amendment has been made to claim 2.
